# EUROPEAN PATENT APPLICATION

(11) **EP 4 510 059 A1**
(43) Date of publication of application: **19.02.2025**
(21) Application number: 23827326.2
(22) Date of filing: 09.03.2023
(51) Int. Cl.: G06Q 10/10, G06Q 50/10, G06F 3/0482, G06F 3/0483, G06F 3/0488

(54) **ELECTRONIC DEVICE AND METHOD FOR PERFORMING OPERATION RELATING TO SOFTWARE APPLICATION FOR SCHEDULE MANAGEMENT**

(30) Priority: 20.06.2022 KR 20220075148; 07.07.2022 KR 20220084048
(71) Applicant: Samsung Electronics Co., Ltd., Suwon-si, Gyeonggi-do 16677 (KR)
(72) Inventor: KIM, Byungwook, Suwon-si Gyeonggi-do 16677 (KR)
(74) Representative: HGF
(86) International application number: PCT/KR2023/003257
(87) International publication number: WO 2023/249206

(57) **Abstract**

According to an embodiment, an electronic device comprises a display and a processor, wherein the processor is configured to: display a calendar and a text input part within a user interface of a software application for schedule management; identify that a first part and a second part of text included in the text input part indicate time information, on the basis of a first user input; identify the first part as first time information; identify the second part as second time information; identify a third part of the text, which is different from the first part, as first title information of a first schedule; identify a fourth part of the text, which is different from the second part, as second title information of a second schedule; and in response to a second user input, display the first title information and the second title information within the calendar.

## Description

### [Field of the Invention]

In accordance with one or more embodiments, the following descriptions relate to an electronic device and a method for performing an operation related to a software application for schedule management.

### [Background]

Various software applications for managing a user's schedule have been developed. The software application may provide a user interface including a calendar. An electronic device may provide a user with a function of registering or modifying a schedule through the software application.

### [SUMMARY]

### [Technical Problem]

The electronic device may provide a function for adding a schedule to an electronic device of a user through a software application for schedule management. The electronic device may provide a user interface for adding a schedule. When a user of the electronic device adds a schedule, a method for increasing user convenience may be required.

The technical problems to be addressed in this document are not limited to those described above, and other technical problems not mentioned herein will be clearly understood by those having ordinary knowledge in the art to which the present disclosure belongs, from the following description.

### [Solution to Problem]

According to an embodiment, an electronic device may comprise a display and a processor operatively coupled with the display. The processor may be configured to display a calendar and a text input part within a user interface of software application for schedule management. The processor may be configured to identify that a first part and a second part of text included in the text input part represent time information, based on a first user input. The processor may be configured to identify the first part as first time information of a first schedule and identify the second part as second time information of a second schedule, based at least part on that the first part and the second part of text included in the text input part represent time information. The processor may be configured to identify a third part of text, which is different from the first part, as first title information of the first schedule and identify a fourth part of text, which is different from the second part, as second title information, based at least part on that the first part and the second part of text included in the text input part represent time information. The processor may be configured to display, in response to a second user input representing registration of a schedule corresponding to the text, the first title information according to the first time information and the second title information according to the second time information.

According to an embodiment, a method of an electronic device may comprise displaying a calendar and a text input part within a user interface of software application for schedule management. The method may comprise identifying that a first part and a second part of text included in the text input part represent time information, based on a first user input. The method may comprise identifying the first part as first time information of a first schedule and identifying the second part as second time information of a second schedule, based at least part on that the first part and the second part of text included in the text input part represent time information. The method may comprise identifying a third part of text, which is different from the first part, as first title information of the first schedule and identifying a fourth part of text, which is different from the second part, as second title information, based at least part on that the first part and the second part of text included in the text input part represent time information. The method may comprise displaying the first title information according to the first time information and the second title information according to the second time information, in response to a second user input representing registration of a schedule corresponding to the text.

### [Advantageous Effects of Invention]

According to an embodiment, since the size of a screen of the electronic device is limited, even when a registered schedule is set to be long, the electronic device can set the title information of the schedule except for a part of text input from the user. The electronic device can improve user convenience by providing title information excluding a part of the text to the user.

The effects that can be obtained from the present disclosure are not limited to those described above, and any other effects not mentioned herein will be clearly understood by those having ordinary knowledge in the art to which the present disclosure belongs, from the following description.

### [BRIEF DESCRIPTION OF THE DRAWINGS]

FIG. 1 is a block diagram of an electronic device in a network environment according to an embodiment.
FIG. 2 illustrates an example of a simplified block diagram of an electronic device according to an embodiment.
FIG. 3 illustrates an example of modules included in a processor and a memory of an electronic device according to an embodiment.
FIG. 4 is a flowchart illustrating an operation of an electronic device according to an embodiment.
FIG. 5 is a flowchart illustrating an operation of an electronic device according to an embodiment.
FIG. 6 illustrates an example of an operation of an electronic device according to an embodiment.
FIGS. 7A and 7B illustrate an example of an operation of an electronic device according to an embodiment.
FIGS. 8A and 8B illustrate an example of an operation of an electronic device according to an embodiment.
FIG. 9 is a flowchart illustrating an operation of an electronic device according to an embodiment.
FIG. 10 illustrates an example of an operation of an electronic device according to an embodiment.
FIG. 11 illustrates an example of an operation of an electronic device according to an embodiment.
FIGS. 12A and 12B illustrate an example of an operation of an electronic device according to an embodiment.
FIGS. 13A and 13B illustrate an example of an operation of an electronic device according to an embodiment.

### [DESCRIPTION]

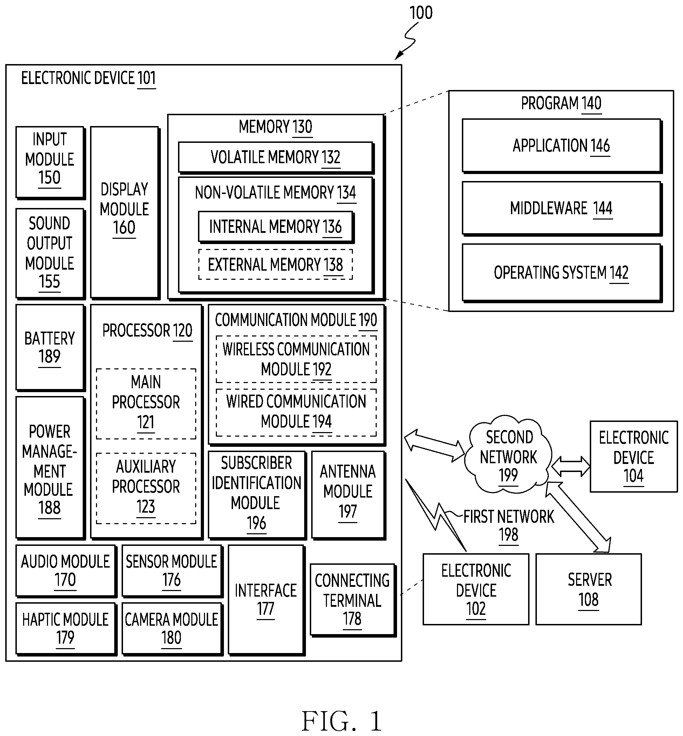

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multipleinput and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, an electronic device (e.g., the electronic device 101 of FIG. 1) may be used to execute a software application for schedule management. The electronic device may identify a user input for registering a schedule in a software application for schedule management from a user of the electronic device. The electronic device may register a schedule based on the identified user input. For example, the electronic device may identify a text based on the identified user input, and identify a schedule that the user intends to register based on the identified text. Hereinafter, an embodiment for registering a schedule through a text identified by an electronic device based on a user input will be described.

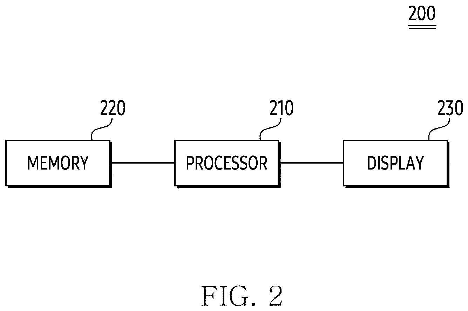

FIG. 2 illustrates an example of a simplified block diagram of an electronic device according to an embodiment.

Referring to FIG. 2, the electronic device 200 may include some or all of components of the electronic device 101 shown in FIG. 1. For example, the electronic device 200 may correspond to the electronic device 101 shown in FIG. 1.

According to an embodiment, the electronic device 200 may include a processor 210, a memory 220, and/or a display 230. According to an embodiment, the electronic device 200 may include at least one of the processor 210, the memory 220, and the display 230. For example, at least some of the processor 210, the memory 220, and the display 230 may be omitted according to an embodiment.

According to an embodiment, the processor 210 may be operably coupled with or connected with the memory 220 and the display 230. For example, the processor 210 may control the memory 220 and the display 230. The memory 220 and the display 230 may be controlled by the processor 210. For example, the processor 210 may be configured with at least one processor. For example, the processor 210 may include at least one processor. For example, the processor 210 may correspond to the processor 120 of FIG. 1.

According to an embodiment, the processor 210 may include a hardware component for processing data based on one or more instructions. For example, the hardware component for processing data may include an Arithmetic and Logic Unit (ALU), a Field Programmable Gate Array (FPGA), and/or a Central Processing Unit (CPU).

According to an embodiment, the electronic device 200 may include the memory 220. The memory 220 may be used to store information or data. For example, the memory 220 may be used to store data for executing a software application (e.g., a software application for schedule management). For example, the memory 220 may be used to store information (or data) obtained from a user. For example, the memory 220 may correspond to the memory 130 of FIG. 1. For example, the memory 220 may be a volatile memory unit or units. For example, the memory 220 may be a nonvolatile memory unit or units. For another example, the memory 220 may be another type of computer-readable medium, such as a magnetic or optical disk. For example, the memory 220 may store information obtained based on an operation (e.g., an algorithm execution operation) performed by the processor 210. For example, the memory 220 may store information (e.g., information on a schedule) obtained from a user.

According to an embodiment, the electronic device 200 may include the display 230. For example, the display 230 may include a touch panel (or a touch screen) and a touch integrated circuit (IC). For example, the display 230 may be used to display various screens. The display 230 may be used to display a user interface of a software application (e.g., a software application for schedule management). For example, the display 230 may correspond to the display module 160 of FIG. 1.

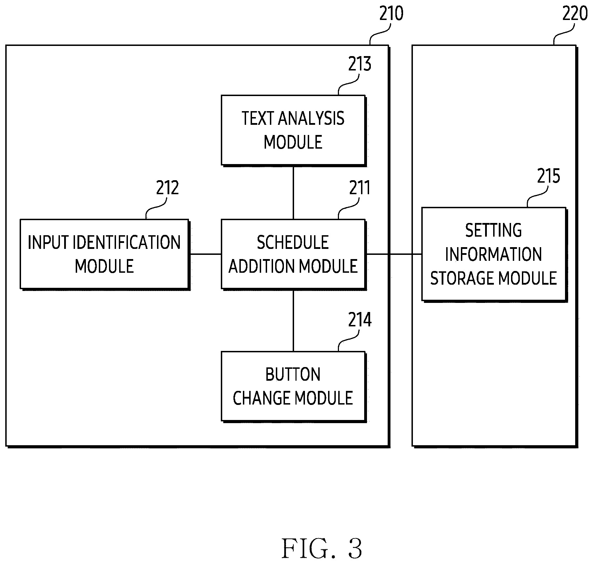

FIG. 3 illustrates an example of modules included in a processor and a memory of an electronic device according to an embodiment.

Referring to FIG. 3, the processor 210 may include various modules for a software application for schedule management. For example, the processor 210 may include a schedule addition module 211, an input identification module 212, a text analysis module 213, and/or a button change module 214. For example, at least a part of the schedule addition module 211, input identification module 212, text analysis module 213, and button change module 214 may be omitted according to an embodiment. According to an embodiment, the memory 220 may include a setting information storage module 215.

According to an embodiment, the schedule addition module 211 may be used to register a schedule identified based on a user input in a software application for schedule management. For example, the schedule addition module 211 may register a schedule based on information received from the input identification module 212, the text analysis module 213, the button change module 214, and the setting information storage module 215.

According to an embodiment, the input identification module 212 may be used to identify text according to a user input. For example, the processor 210 may use the input identification module 212 to identify that text according to a user input is input to the text input part displayed through the display 230. The processor 210 may transmit text according to a user input to the schedule addition module 211 using the input identification module 212.

According to an embodiment, the text analysis module 213 may be used to interpret a text according to a user input. For example, the processor 210 may identify that at least a part of the text represents time information using the text analysis module 213. For example, the processor 210 may identify that at least a part of the text, being composed of a prepositional phrase, represents time information, based on identifying the prepositional phrase using text analysis module 213. For example, the processor 210 may identify a type of schedule based on at least a part of the text using the text analysis module 213.

According to an embodiment, the button change module 214 may be used to change at least a part of a text that indicates time information identified by text analysis module 213 into an image (or button). For example, the processor 210 may use the button change module 214 to change at least a part of the text indicating time information into an image and display the image through the display 230.

According to an embodiment, the setting information storage module 215 included in the memory 220 may be used to store setting information of a software application. For example, the processor 210 may identify setting information of the software application included in the setting information storage module 215. The processor 210 may identify whether (or determine whether to identify) at least a part of the text indicating the time information as title information of the schedule based on the setting information.

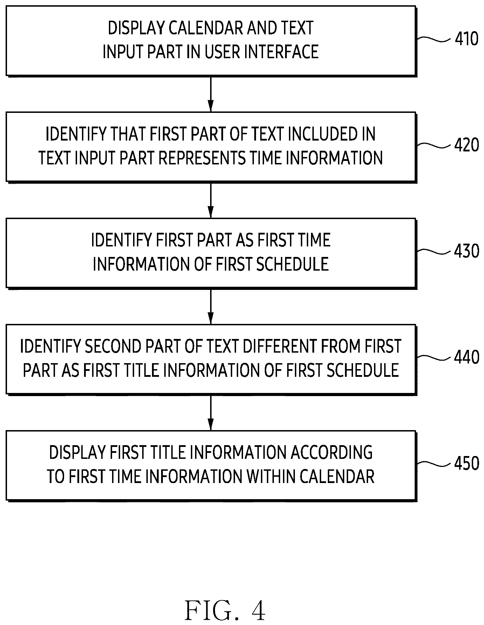

FIG. 4 is a flowchart illustrating an operation of an electronic device according to an embodiment.

Referring to FIG. 4, in operation 410, the processor 210 may display a calendar and a text input part in a user interface. For example, the processor 210 may display the calendar and the text input part within a user interface of a software application for schedule management.

According to an embodiment, the processor 210 may display a user interface. For example, the user interface may be related to a software application for schedule management. For example, the user interface may include a calendar and a text input part. The processor 210 may display a calendar and a text input part by displaying a user interface of a software application for schedule management.

For example, a software application for schedule management may be used to register a user's schedule. The processor 210 may identify text input from a user and register a schedule in a software application based on the identified text. The processor 210 may display a registered schedule through a software application. For example, the processor 210 may display a registered schedule within the calendar.

For example, a schedule registered in a calendar within a user interface may be displayed. The processor 210 may display at least one registered schedule on the calendar. For example, the calendar may include a plurality of areas indicating a plurality of dates. The processor 210 may display at least one schedule in at least one of a plurality of areas based on date information of the at least one registered schedule among the plurality of areas.

For example, a user interface may include a text input part together with a calendar. The processor 210 may display a virtual keyboard, superimposed on the calendar, based on identifying an input for the text input part. The processor 210 may receive a user input (e.g., a first user input) for registering a schedule received through the virtual keyboard.

For example, the processor 210 may display text in the text input part based on a user input. For example, the processor 210 may display the received text on the text input part according to the user input.

In operation 420, the processor 210 may identify that the first part of the text included in the text input part represents time information. For example, the processor 210 may identify that the first part of the text included in the text input part represents time information based on the first user input.

According to an embodiment, the processor 210 may receive a first user input. For example, the processor 210 may receive a first user input for registering the first schedule. The first user input may include a text input for registering the first schedule. The processor 210 may identify a text based on the first user input. The processor 210 may identify a text based on the first user input by using the input identification module 212.

According to an embodiment, the processor 210 may identify that the first part of the text based on the first user input represents time information, by using the text analysis module 213.

For example, the processor 210 may identify that the first part of the text indicates time information. For example, the processor 210 may identify that "10 PM" among "10 PM workouts" represents time information.

For example, the processor 210 may identify that the first part of the text composed of a prepositional phrase indicates time information. For example, the processor 210 may identify that "at 9 AM" among "go to school at 9 AM" indicates time information.

In operation 430, the processor 210 may identify the first part as first time information of the first schedule. For example, the processor 210 may identify the first part as the first time information of the first schedule, based on at least in part of identifying that the first part indicates time information.

According to an embodiment, the first schedule may comprise first time information and first title information. The processor 210 may identify the first part of the text as the first time information of the first schedule.

According to an embodiment, the processor 210 may change the first part to a first image indicating the first time information based on at least in part of identifying that the first part indicates time information. For example, the processor 210 may change the first part into a first image indicating the first time information by using the button change module 214. The processor 210 may display the first image in a text input part together with a second part different from the first part of the text.

According to an embodiment, the processor 210 may add the first image indicating the first time information to the time information based on at least in part of identifying that the first part indicates time information. For example, the processor 210 may display the first image indicating the first time information by overlaying the first time information using the button change module 214. The processor 210 may display the first image in a text input part together with a second part different from the first part of the text.

According to an embodiment, the first time information may include start time information. The processor 210 may identify the first part as a start time information of the first schedule. The processor 210 may identify a type of the first schedule based on the second part. The processor 210 may identify the end time information of the first schedule based on the type of the first schedule.

For example, the electronic device 200 may store information on elapsed time according to the type of schedule in the memory 220. The information on elapsed time according to the type of schedule may be set as shown in Table 1.

**[Table 1]**

| TYPE | Estimated Time |
|---|---|
| watch something | 2 hour |
| food/meal | 1 hour |
| meeting/conference | 2 hour |
| fitness/gym | 2 hour |
| shopping | 2 hour |
| seminar | 4 hour |

Referring to Table 1, elapsed time of the watch something type may be set to 2 hours. Elapsed time of the food/meal type may be set to 1 hour. Elapsed time of the meeting/conference type may be set to 2 hours. Elapsed time of the fitness/gym type may be set to 2 hours. Elapsed time of the shopping type may be set to 2 hours. Elapsed time of the seminar type may be set to 2 hours. Table 1 is exemplary, and elapsed time according to various types other than the types of Table 1 may be set. For example, when the second part corresponds to "workout", the processor 210 may identify the type of the first schedule as the fitness/gym type. The processor 210 may set the start time of the first schedule to 2 pm based on the first part set to "2 pm". The processor 210 may set the end time to 4 p.m. based on the type of the first schedule identified as the fitness/gym type.

For example, the processor 210 may store schedule history information of the user in the memory 220. The processor 210 may update information on elapsed time according to the schedule type based on the schedule history information of the user. For example, the processor 210 may identify that the shopping time is set to 1 hour based on the schedule history information. The processor 210 may update (or change) the elapsed time of the shopping type from 2 hours to 1 hour.

In operation 440, the processor 210 may identify a second part of text different from the first part as first title information of the first schedule. For example, the processor 210 may identify the second part of the text different from the first part as the first title information of the first schedule, based on at least in part of identifying that the first part represents time information.

According to an embodiment, the processor 210 may identify the second part from which the first part of the text is excluded as first title information of the first schedule. For example, the processor 210 may identify "go to school", in which "at 9 AM" is excluded from "go to school at 9 AM", as the first title information of the first schedule.

In operation 450, the processor 210 may display the first title information according to the first time information in a calendar. According to an embodiment, the processor 210 may display the first title information according to the first time information in the calendar in response to a second user input indicating registration of the first schedule corresponding to the text.

According to an embodiment, the processor 210 may display an object for registering a schedule together with a text input part. The processor 210 may receive a second user input for the object while the text is included in the text input part. The processor 210 may register the first schedule corresponding to the text in response to the second user input. In response to the second user input, the processor 210 may overlay and display a pop-up window indicating that the first schedule is registered on the calendar display area, or the processor 210 may display a pop-up window indicating that the first schedule is registered in an area different from the calendar display area in response to the second user input. The processor 210 may display the pop-up window including the start time of the first schedule, the text of the first title information from which the time information is deleted, and information on the duration of the first schedule. After the first schedule is registered, the processor 210 may display the first title information according to the first time information in the calendar. For example, the processor 210 may display the first title information according to the first time information in an area corresponding to a current date in the calendar, based on the second user input.

According to an embodiment, the processor 210 may set first title information based on setting information on a software application. For example, the processor 210 may set both the first part and the second part as the first title information based on setting information related to the time information. For example, the processor 210 may identify only the second part as first title information based on setting information related to the time information. A specific example of identifying the first title information based on the setting information will be described later.

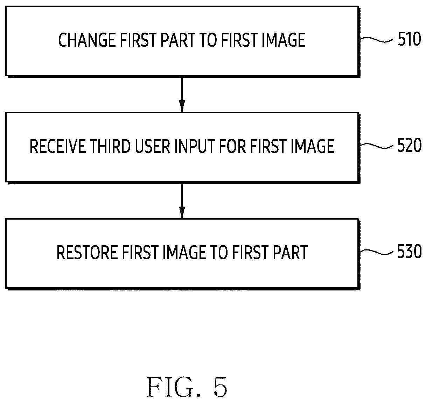

FIG. 5 is a flowchart illustrating an operation of an electronic device according to an embodiment.

Referring to FIG. 5, operations 510 to 530 may be performed after operation 420 of FIG. 4 is performed.

In operation 510, the processor 210 may change a first part into a first image. For example, the processor 210 may change a first part to a first image representing first time information, based on at least in part of identifying that the first part represents time information. For example, the processor 210 may change the first part into the first image using the button change module 214. According to an embodiment, the processor 210 may change only the first part representing the time information, among the text, into the first image. The processor 210 may display the first image together with the second part of the text.

According to an embodiment, the processor 210 may overlay and display the first image on the first part. For example, the processor 210 may display the first image representing the first time information, by overlaying with the first part based on at least in part of identifying that the first part represents time information. According to an embodiment, among the text, the processor 210 may overlay and display only the first part representing the time information on the first image. The processor 210 may display the first image together with the second part of the text.

In operation 520, the processor 210 may receive a third user input for the first image. For example, the processor 210 may receive a third user input for the first image after the first part is changed to the first image. For example, the processor 210 may receive a third user input for the first image after the first part is displayed by overlaying with the first image.

According to an embodiment, the third user input may include a tap input, a double tap input, a long press input, a drag input, and a swipe input. For example, the processor 210 may receive a tap input for the first image as the third user input.

In operation 530, the processor 210 may restore the first image to the first part. For example, the processor 210 may restore the first image to the first part in response to receiving the third user input for the first image. For example, the processor 210 may restore the first image to the first part in response to the third user input for the first image.

For example, the processor 210 may restore the first image to a first part of the text in a text form in response to receiving a third user input for the first image. The processor 210 may restore the first image to the first part of text in the form of text in response to the third user input for the first image. The processor 210 may display both the first part and the second part of the text identified based on the first user input within the text input part.

According to an embodiment, the processor 210 may delete the first image. For example, the processor 210 may delete the first image in response to receiving the third user input for the first image. For example, the processor 210 may delete the first image and display the first part in response to the third user input for the first image.

According to an embodiment, the processor 210 may set the first time information of the first schedule to a pre-defined time based on receiving the third user input for the first image.

For example, after the first time information of the first schedule is set as the first part, the processor 210 may change the first time information of the first schedule to a pre-defined time.

For example, the pre-defined time may be set to "all day". The processor 210 may set (or change) the first time information of the first schedule to "all day" based on receiving the third user input.

According to an embodiment, the processor 210 may add the first time information of the first schedule to the title information based on receiving the third user input for the first image.

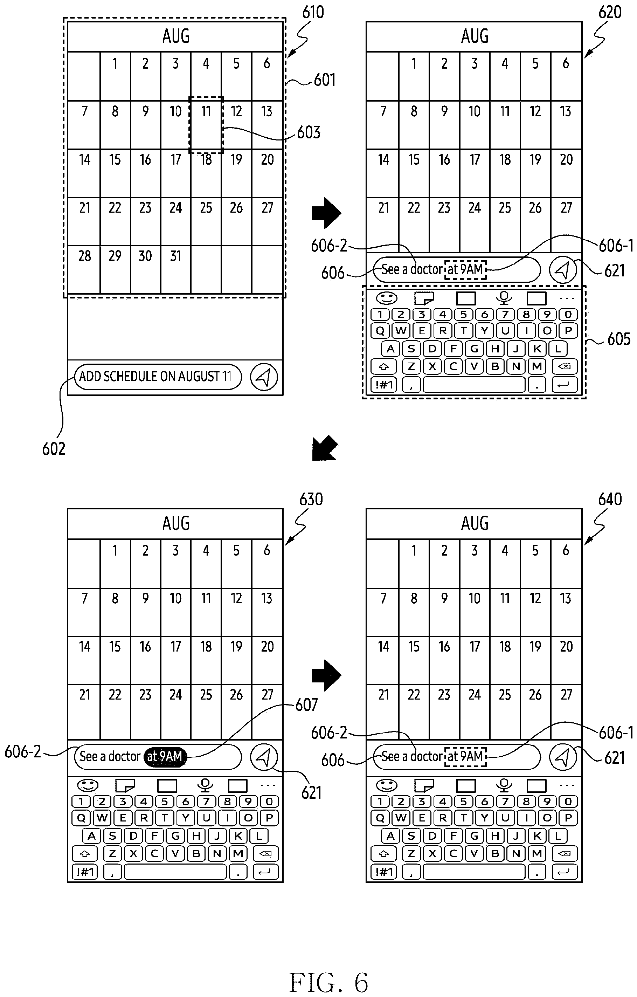

FIG. 6 illustrates an example of an operation of an electronic device according to an embodiment.

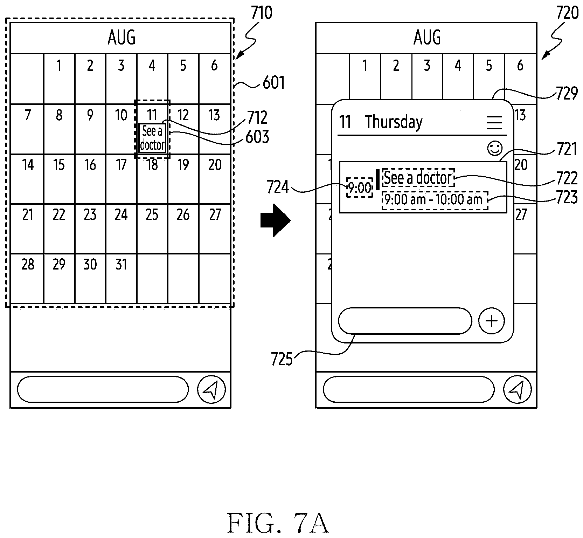

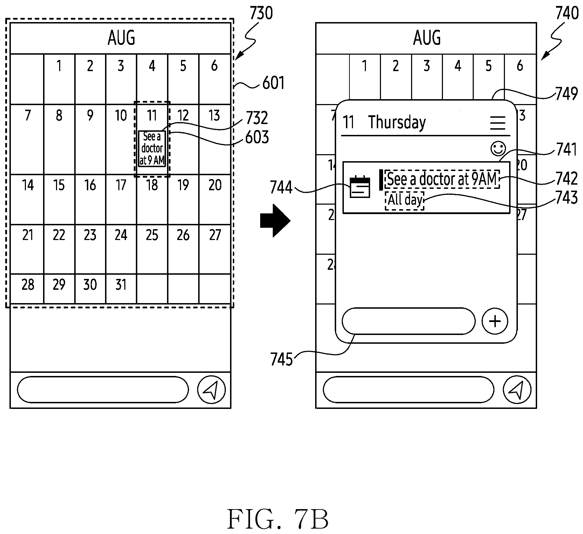

FIGS. 7A and 7B illustrate an example of an operation of an electronic device according to an embodiment.

Referring to FIG. 6, in the state 610, the processor 210 may display a user interface of a software application for schedule management through the display 230. The user interface of the software application may include a calendar 601 and a text input part 602.

According to an embodiment, the processor 210 may display the calendar 601. The calendar 601 may include a plurality of areas indicating a plurality of dates. For example, the processor 210 may receive at least one touch input for the first area 603 among the plurality of areas. The processor 210 may highlight and display the first area 603 based on at least one touch input for the first area 603. According to an embodiment, the processor 210 may highlight and display another area, based on at least one touch input for another area (not shown) different from the first area 603 among the plurality of areas.

According to an embodiment, the processor 210 may display a text input part 602. The text input part 602 may provide visual affordance (e.g., visual indication) to input a schedule on a date corresponding to the first area 603 (or the highlighted area). For example, the processor 210 may display a visual affordance composed of the text "add schedule on August 11" on the text input part 602, based on the date corresponding to the first area 603 being August 11, 2022.

According to an embodiment, the processor 210 may receive at least one touch input for the text input part 602. The processor 210 may change the state of the electronic device 200 from the state 610 to the state 620 based on at least one touch input for the text input part 602.

In state 620, the processor 210 may display a virtual keyboard 605 based on at least one touch input for the text input part 602. The processor 210 may display the virtual keyboard 605 in response to at least one touch input for the text input part 602. For example, the processor 210 may display the virtual keyboard 605 together with the text input part 602 in response to receiving at least one touch input for the text input part 602, superimposed on the calendar 601. For example, the processor 210 may display an object 621 for registering a schedule together with the text input part 602.

According to an embodiment, in the state 620, the processor 210 may receive a first user input. For example, the processor 210 may receive a first user input received through the virtual keyboard 605.

For example, the first user input may include a text input. The processor 210 may receive a text 606 based on the first user input. The processor 210 may display the text 606 in the text input part 602. The text input part 602 may include the text 606 based on the first user input.

According to an embodiment, the processor 210 may identify that a first part 606-1 included in the text 606 represents time information. For example, the processor 210 may identify a prepositional phrase within the text 606. The processor 210 may identify that a first part 606-1 composed of a prepositional phrase represents time information. For example, the processor 210 may identify a first part 606-1 including at least one word indicating time within the text 606. The processor 210 may identify that the first part 606-1 including at least one word indicating time represents time information.

According to an embodiment, the processor 210 may identify the first part 606-1 as the first time information of the first schedule based on at least a part of identifying that the first part 606-1 represents time information. According to an embodiment, the processor 210 may identify the first time information of the first schedule based on the first part 606-1.

According to an embodiment, the processor 210 may identify a second part 606-2 of the text 606, which is different from the first part 606-1, as the first title information of the first schedule, based on at least in part of identifying that the first part 606-1 represents time information.

In state 630, the processor 210 may change the first part 606-1 to a first image 607 indicating the first time information, based on at least in part of identifying that the first part 606-1 represents time information. The processor 210 may overlay and display the text indicating the first time information and the first image 607 based on at least in part of identifying that the first part 606-1 represents time information. The processor 210 may display the first image 607 together with the second part 606-2 in the text input part 602.

According to an embodiment, the processor 210 may receive a second user input for registering a schedule in a state that the first part 606-1 is changed to the first image 607 indicating the first time information. For example, the processor 210 may receive a second user input to the object 621 in a state that the first part 606-1 is changed to the first image 607 indicating the first time information. The second user input to the object 621 may indicate registration of a schedule corresponding to the text 606 input by the first user input. The processor 210 may register the first schedule in response to the second user input. When the first schedule is registered in a state that the first part 606-1 is changed to the first image 607, the state of the electronic device 200 may be set as shown in a state 710 of FIG. 7A.

Referring to FIG. 7A, in the state 710, the processor 210 may display first title information of the first schedule within the first area 603 among a plurality of areas of the calendar 601. The processor 210 may display an object 712 indicating first title information of the first schedule. For example, the first title information may be set to a second part 606-2.

According to an embodiment, the processor 210 may receive at least one touch input for the first area 603 or the object 712. The processor 210 may change the state of the electronic device 200 from the state 710 to the state 720 in response to at least one touch input for the first area 603 or the object 712.

For example, the processor 210 may change the state of the electronic device 200 from the state 710 to the state 720 in response to at least one touch input for the first area 603. For example, the processor 210 may change the state of the electronic device 200 from state 710 to state 720 in response to at least one touch input to the object 712.

In state 720, the processor 210 may display a pop-up window 729 including another text input part 725 together with at least one schedule set on a date corresponding to the first area 603, in response to at least one touch input for the first area 603 or object 712. For example, the processor 210 may display the pop-up window 729 including at least one schedule set on a date corresponding to the first area 603 and another text input part 725, in response to at least one touch input for the first area 603. For example, the processor 210 may display the pop-up window 729 including at least one schedule set on a date corresponding to the first area 603 and another text input part 725, in response to at least one touch input to object 712.

According to an embodiment, the processor 210 may identify a first schedule registered on a date corresponding to the first area 603. The processor 210 may display the first schedule in the area 721 within the pop-up window 729.

For example, the processor 210 may display text 722 indicating first title information of the first schedule in the area 721. Since the second part 606-2 is set as the first title information, the text 722 may correspond to the second part 606-2. The processor 210 may display only the second part 606-2 from which the first part 606-1 is excluded from the text 606 in the area 721.

According to an embodiment, the processor 210 may display text 723 indicating first time information of the first schedule in the area 721. For example, the first time information may include start time information and end time information. The processor 210 may set the first part 606-1 as start time information of the first schedule among the first time information. The processor 210 may identify a type of the first schedule based on the second part 606-2. The processor 210 may identify end time information based on the type of the first schedule. The processor 210 may display text 722 indicating start time information and end time information in the area 721. For example, the processor 210 may display text 724 indicating start time information in the area 721.

According to an embodiment, the processor 210 may display another text input part 725 in the pop-up window 729. The pop-up window 729 may include another text input part 725. The processor 210 may add a schedule different from the first schedule to a date corresponding to the first area 603 based on a user input for another text input part 725.

According to an embodiment, the processor 210 may provide a user interface for changing first title information and/or first time information of the first schedule based on at least one touch input to the area 721.

Referring back to FIG. 6, in the state 630, the processor 210 may receive a third user input for the first image 607. The processor 210 may change the state of the electronic device 200 from the state 630 to the state 640 in response to the third user input.

In the state 640, the processor 210 may restore the first image 607 to the first part 606-1 in response to the third user input for the first image 607. For example, the processor 210 may change the first image 607 to the first part 606-1. The processor 210 may display the text 606 including both the first part 606-1 and the second part 606-2 within the text input part 602.

According to an embodiment, the processor 210 may identify the first part 606-1 and the second part 606-2 as the first title information of the first schedule based on the first image 607 being restored to the first part 606-1 (or third user input). The processor 210 may change the first time information of the first schedule to a pre-defined time based on the first image 607 being restored to the first part 606-1 (or third user input). For example, the pre-defined time may include "all day".

According to an embodiment, the processor 210 may identify a second user input for registering a schedule in a state that the first image 607 is restored to the first part 606-1. For example, the processor 210 may identify a second user input to the object 621 in a state that the first image 607 is restored to the first part 606-1. The processor 210 may register the first schedule in response to the second user input. When the first image 607 is restored to the first part 606-1, the state of the electronic device 200 may be set as shown in the state 730 of FIG. 7B.

Referring to FIG. 7B, in the state 730, the processor 210 may display first title information of the first schedule within the first area 603 among a plurality of areas of the calendar 601. The processor 210 may display an object 732 indicating first title information of the first schedule. For example, the first title information may be set to a first part 606-1 and a second part 606-2.

According to an embodiment, the processor 210 may receive at least one touch input for the first area 603 or the object 732. The processor 210 may change the state of the electronic device 200 from the state 730 to the state 740 in response to at least one touch input for the first area 603 or the object 732.

For example, the processor 210 may change the state of the electronic device 200 from state 730 to state 740 in response to at least one touch input for the first area 603. For example, the processor 210 may change the state of the electronic device 200 from state 730 to state 740 in response to at least one touch input to the object 732.

In state 740, in response to at least one touch input for the first area 603 or object 732, the processor 210 may display a pop-up window 749 including another text input part 745 together with at least one schedule set on a date corresponding to the first area 603. For example, in response to at least one touch input for the first area 603, the processor 210 may display the pop-up window 749 including at least one schedule set on a date corresponding to the first area 603 and another text input part 745. For example, the processor 210 may display the pop-up window 749 including at least one schedule set on a date corresponding to the first area 603 and another text input part 745 in response to at least one touch input to the object 732.

According to an embodiment, the processor 210 may identify a first schedule registered on a date corresponding to the first area 603. The processor 210 may display the first schedule in the area 741 in the pop-up window 749.

For example, the processor 210 may display text 742 indicating first title information of the first schedule within the area 741. Since both the first part 606-1 and the second part 606-2 are set as the first title information, the text 722 may correspond to the text 606 including the first part 606-1 and the second part 606-2. The processor 210 may display the text 606 in the area 741.

According to an embodiment, the processor 210 may display text 743 indicating first time information of the first schedule in the area 741. For example, since the first time information is set to pre-defined time, the processor 210 may display the text 743 indicating the pre-defined time (e.g., "all day"). For example, the processor 210 may display an object 744 indicating a pre-defined time (e.g., "all day") in the area 741.

Referring to FIGS. 6 to 7B, the processor 210 may identify whether the first part 606-1 of text indicating time information is to be included in the first title information of the first schedule based on a user input. For example, based on receiving a second user input in a state that the first image 607 is displayed, the processor 210 may identify (or set) only the second part 606-2 as the first title information of the first schedule, without the first part 606-1 indicating time information, among the text 606 based on the first user input. For example, the processor identify(or set), based on receiving a second input in a state that the first image 607 is restored to the first part 606-1, a text 606 based on the first user input as first title information.

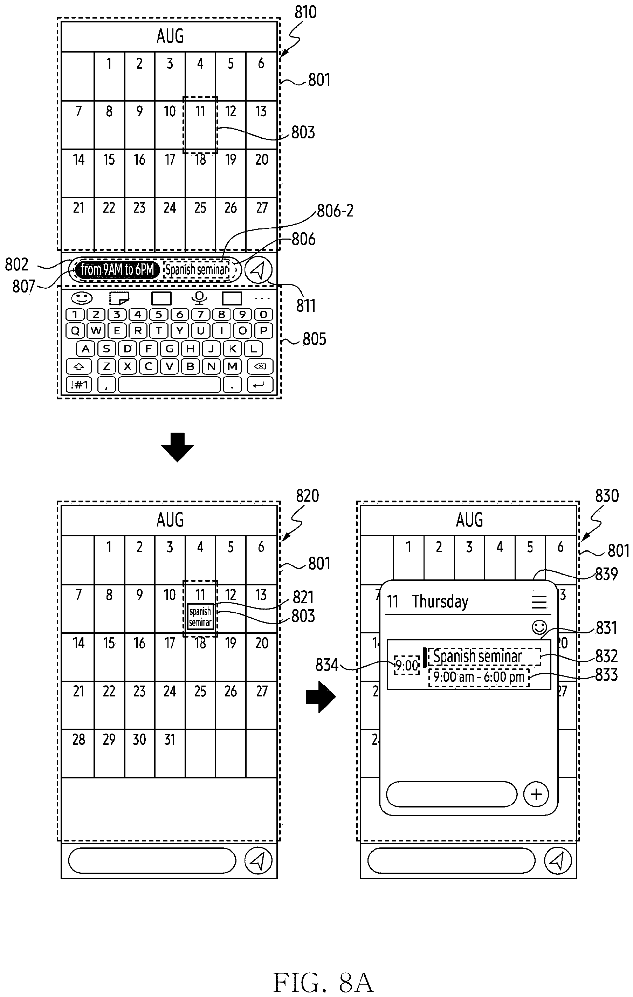

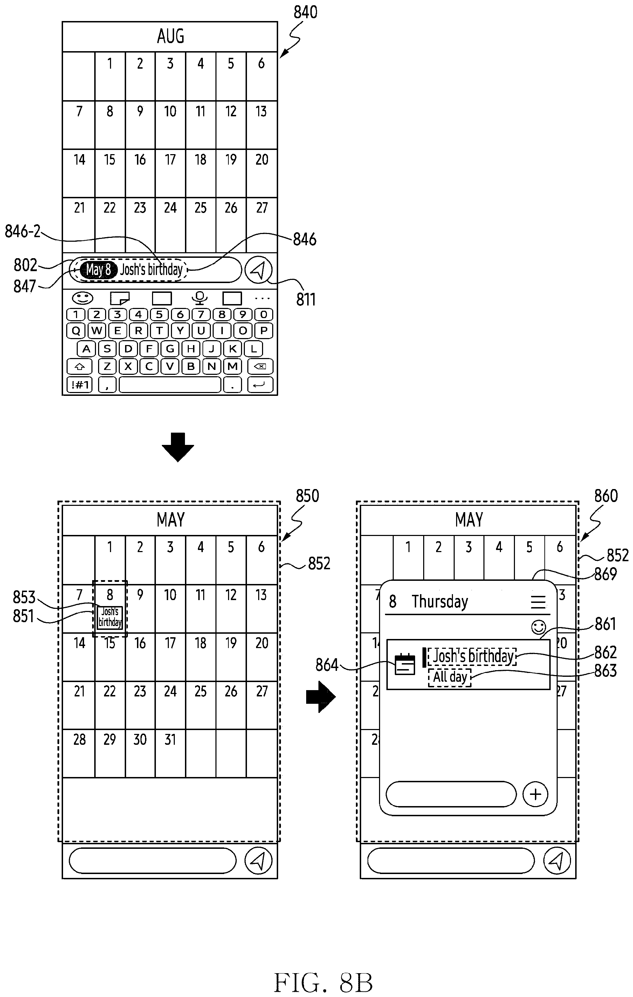

FIGS. 8A and 8B illustrate an example of an operation of an electronic device according to an embodiment.

Referring to FIG. 8A, in state 810, the processor 210 may display a text input part 802 and a virtual keyboard 805, superimposed on a calendar 801. For example, the processor 210 may highlight and display an area 803 corresponding to the current date. For example, the processor 210 may display text 806 identified based on the first user input in a text input part 802. The text 806 may be related to the first schedule.

For example, the processor 210 may identify that the first part (not shown) of the text 806 represents time information. The processor 210 may change the first part of the text 806 indicating time information to the first image 807. The first part of the text 806 indicating time information may be changed and displayed as the first image 807. The processor 210 may display the first image 807 and the second part 806-2 of the text 806 within the text input part 802.

For example, the processor 210 may identify the second part 806-2 as first title information of the first schedule. The processor 210 may identify time information represented by the first image 807 as first time information of the first schedule.

According to an embodiment, the processor 210 may identify the start time and the end time of the schedule by analyzing the meaning of the preposition for time information composed of the prepositional phrase. For example, the first time information of the first schedule may include start time information of the first schedule and end time information of the first schedule. The processor 210 may identify start time information of the first schedule and end time information of the first schedule based on the preposition input in the first schedule based on the first image 807 (or the first part). For example, the processor 210 may identify a first part composed of a prepositional phrase. The processor 210 may change the first part to the first image 807 and identify the first time interval based on the first part. For example, the first part of the text 806 may be "from 9 AM to 6 PM". The processor 210 may identify the start time information of the first schedule as "9 AM" by using the preposition "from". The processor 210 may identify the end time information of the first schedule as "6 PM" by using the preposition "to".

According to an embodiment, the processor 210 may receive a second user input indicating registration of the first schedule. For example, the processor 210 may receive a second user input for an object 811. The processor 210 may register the first schedule based on the second user input. The processor 210 may change the state of the electronic device 200 from the state 810 to the state 820 based on the second user input.

In state 820, the processor 210 may display first title information of the first schedule within the area 803 among a plurality of areas representing a plurality of dates in calendar 801. The processor 210 may display an object 821 indicating the first title information in the area 803. For example, the processor 210 may display the object 821 indicating the second part 806-2 within the area 803 based on the second part 806-2 of the text 806 being set as the first title information.

According to an embodiment, the processor 210 may receive at least one touch input for the area 803 (or the object 821). The processor 210 may change the state of the electronic device 200 from the state 820 to the state 830 in response to at least one touch input for the area 803 (or the object 821).

In state 830, the processor 210 may display a pop-up window 839, superimposed on the calendar 801, in response to at least one touch input for the area 803. The pop-up window 839 may include an area 831 indicating a registered first schedule. The processor 210 may display text 832 indicating first title information of the first schedule in the area 831. The processor 210 may display text 833 indicating first time information (e.g., start time information and end time information of the first schedule) of the first schedule within the area 831. The processor 210 may display text 834 indicating start time information of the first schedule.

Referring to FIG. 8B, the processor 210 may display text 846 identified based on the first user input within the text input part 802. The text 806 may be related to the first schedule.

The processor 210 may identify that a first part (not shown) of the text 846 indicates date information. The processor 210 may change the first part of the text 846 indicating date information to a first image 847. The first part of the text 846 indicating date information may be changed to the first image 847 and displayed. The processor 210 may display the first image 847 and a second part 846-2 of the text 846 within the text input part 802.

For example, the processor 210 may identify the second part 806-2 as first title information of the first schedule. The processor 210 may identify date information represented by the first image 807 as first date information of the first schedule. The processor 210 may set the first time information of the first schedule to a pre-defined time (e.g., "all day"), based on the time information not included in the first part. The processor 210 may set the first time information of the first schedule to a pre-defined time (e.g., "all day") based on that the first part includes only date information.

According to an embodiment, the processor 210 may receive a second user input indicating registration of the first schedule. For example, the processor 210 may receive a second user input for the object 811. The processor 210 may register the first schedule based on the second user input. The processor 210 may change a state of the electronic device 200 from the state 840 to the state 850 based on the second user input.

In the state 850, the processor 210 may identify the date of the first schedule based on the date information of the first schedule. The processor 210 may display a calendar 852 including an area 851 corresponding to a date of the first schedule. The processor 210 may display first title information of the first schedule within the area 851. The processor 210 may display an object 853 indicating first title information of the first schedule within the area 851. For example, the processor 210 may display the object 853 representing the second part 846-2 within the area 851, based on the second part 846-2 of the text 846 being set as the first title information.

According to an embodiment, the processor 210 may receive at least one touch input for the area 851 (or the object 853). The processor 210 may change a state of the electronic device 200 from the state 850 to the state 860 in response to at least one touch input for the area 851 (or the object 853).

In state 860, the processor 210 may display a pop-up window 869, superimposed on a calendar 852, in response to at least one touch input for the area 851. The pop-up window 869 may include an area 861 indicating the registered first schedule. For example, the processor 210 may display text 862 indicating first title information of the first schedule within the area 861. The text 862 may correspond to the second part 846-2. For example, the processor 210 may display text 863 indicating first time information of the first schedule within the area 861. For example, the processor 210 may display text 863 indicating first time information set to a pre-defined time (e.g., "all day"). For example, the processor 210 may display an object 864 indicating a pre-defined time (e.g., "all day") within the area 861.

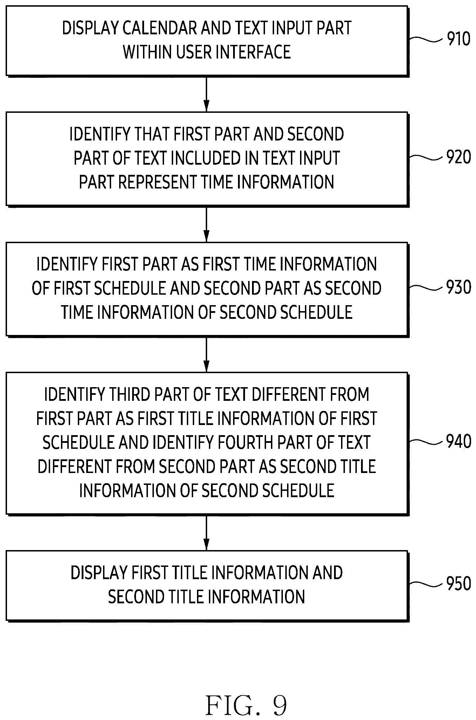

FIG. 9 is a flowchart illustrating an operation of an electronic device according to an embodiment.

Referring to FIG. 9, in operation 910, the processor 210 may display a calendar and a text input part within a user interface. For example, the processor 210 may display a calendar and a text input part within a user interface of a software application for schedule management. For example, operation 910 may correspond to operation 410 of FIG. 4.

In operation 920, the processor 210 may identify that the first part and second part of the text included in the text input part represent time information. For example, the processor 210 may identify that the first part and second part of the text included in the text input part represent time information based on the first user input.

According to an embodiment, the processor 210 may receive a first user input. For example, the processor 210 may receive a first user input for registering the first schedule and the second schedule. The first user input may include a text input for simultaneously registering the first schedule and the second schedule. The processor 210 may identify text based on the first user input. For example, the processor 210 may identify the first user input by using the input identification module 212. The processor 210 may identify text based on the first user input by using the input identification module 212.

According to an embodiment, the text based on the first user input may include a first part and a third part related to the first schedule. The text based on the first user input may include a second part and a fourth part related to the second schedule. According to an embodiment, the text based on the first user input may include a fifth part for dividing the first schedule and the second schedule. For example, the fifth part may include a connective term (e.g., and) or a comma. The processor 210 may identify that the first part and the second part respectively represent time information based on the fifth part.

According to an embodiment, the processor 210 may change the first part to a first image indicating the first time information and change the second part to a second image indicating the second time information, based on at least in part of identifying that the first part and second part represent time information. For example, the processor 210 may change the first part to a first image representing the first time information, based on at least in part of identifying that the first part represents time information. For example, the processor 210 may change the second part to a second image representing the second time information, based at least a part of identifying that the second part represents time information. For example, the processor 210 may change the first part to a first image and change the second part to a second image and display the same, among text based on first user input.

In operation 930, the processor 210 may identify the first part as first time information of the first schedule and identify the second part as second time information of the second schedule. For example, the processor 210 may identify the first part as first time information of the first schedule and may identify the second part as second time information of the second schedule, based on at least a part of identifying that the first part and second part represent time information.

According to an embodiment, the processor 210 may identify the first part as first time information of the first schedule based on at least a part of identifying that the first part represents time information. According to an embodiment, the processor 210 may identify the second part as second time information of the second schedule based on at least a part of identifying that the second part represents time information.

According to an embodiment, the first part and the second part may be composed of prepositional phrases, respectively. The processor 210 may identify the first time interval based on the first part. The processor 210 may identify the second time interval based on the second part. For example, the processor 210 may identify start time information of the first schedule and end time information of the first schedule based on the first time interval, among the first time information. For example, the processor 210 may identify start time information of the second schedule and end time information of the second schedule based on the second time interval, among the second time information.

In operation 940, the processor 210 may identify a third part of the text different from the first part as first title information of the first schedule, and may identify a fourth part of the text different from the second part as second title information of the second schedule. For example, the processor 210 may identify the third part of the text different from the first part as the first title information of the first schedule, and the fourth part of the text different from the second part as the second title information of the second schedule, based on at least a part of identifying that the first part and second part represent time information.

According to an embodiment, the processor 210 may identify the first schedule and the second schedule by using text based on the first user input. The processor 210 may identify the first part as first time information of the first schedule. The processor 210 may identify the third part as first title information of the first schedule. The processor 210 may identify the second part as second time information of the second schedule. The processor 210 may identify the fourth part as second title information of the second schedule.

In operation 950, the processor 210 may display first title information and second title information. For example, the processor 210 may display the first title information according to the first time information and the second title information according to the second time information in the calendar, in response to a second user input indicating the registration of a schedule corresponding to the text.

According to an embodiment, the processor 210 may display the first title information and the second title information within an area corresponding to a selected date (e.g., the current date). For example, the processor 210 may display a first object indicating the first title information and a second object indicating the second title information within an area corresponding to the selected date.

For example, the processor 210 may receive at least one touch input for the first area among a plurality of areas indicating a plurality of dates in the calendar. The processor 210 may identify the first user input after at least one touch input for the first area is received. The processor 210 may display a first object (or first title information) indicating the first title information and a second object (or second title information) indicating the second title information in the first area.

According to an embodiment, the processor 210 may receive at least one touch input for the first area among a plurality of areas representing a plurality of dates in the calendar. The processor 210 may display a pop-up window including another text input part together with at least one schedule set at a date corresponding to the first area, superimposed on the calendar, in response to at least one touch input. The processor 210 may display first title information and second title information within the calendar based on a first user input for another text input part.

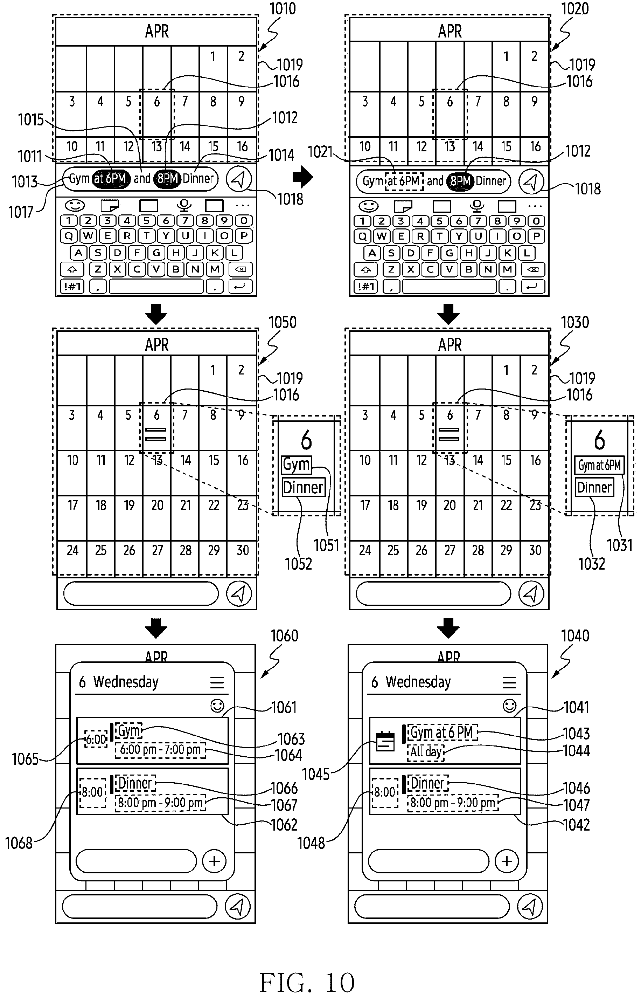

FIG. 10 illustrates an example of an operation of an electronic device according to an embodiment.

Referring to FIG. 10, in the state 1010, the processor 210 may identify text based on a first user input. The processor 210 may identify that the first part (not shown) and the second part (not shown) of the text represent time information. The processor 210 may change the first part to a first image 1011 indicating first time information. The processor 210 may change the second part to a second image 1012 indicating second time information. The processor 210 may display a third part 1013, a first image 1011, a fifth part 1015, a second image 1012, and a fourth part 1014 in a text input part 1017. For example, the first part (or the first image 1011) and the third part may be related to the first schedule. The second part (or the second image 1012) and the fourth part may be related to the second schedule.

According to an embodiment, the processor 210 may identify the first part as first time information of the first schedule. The processor 210 may identify first time information of the first schedule based on the first image 1011. According to an embodiment, the processor 210 may identify the second part as second time information of the second schedule. The processor 210 may identify second time information of the second schedule based on the second image 1012.

According to an embodiment, the processor 210 may identify the third part 1013 as first title information of the first schedule. According to an embodiment, the processor 210 may identify the fourth part 1014 as second title information of the second schedule.

According to an embodiment, the processor 210 may receive a second user input indicating registration of a schedule (e.g., the first schedule and the second schedule) corresponding to text based on the first user input. For example, the processor 210 may receive a second user input for the object 1018 to register a schedule (e.g., the first schedule and the second schedule) corresponding to the text. The processor 210 may change a state of the electronic device 200 from the state 1010 to the state 1050 based on the second user input.

In the state 1050, the processor 210 may display first title information and second title information in the first area 1016 among a plurality of areas indicating a plurality of dates within the calendar 1019. For example, the processor 210 may display an object 1051 indicating first title information in the first area 1016. The processor 210 may display an object 1052 indicating the second title information in the first area 1016. The object 1051 may represent a third part 1013. The object 1052 may represent a fourth part 1014.

According to an embodiment, the processor 210 may change a state of the electronic device 200 from the state 1050 to the state 1060 in response to at least one touch input for the first area 1016.

In the state 1060, the processor 210 may display an area 1061 for indicating the first schedule and an area 1062 for indicating the second schedule.

According to an embodiment, the processor 210 may display text 1063 indicating first title information within the area 1061. For example, the text 1063 may correspond to the third part 1013. According to an embodiment, the processor 210 may display text 1064 indicating first time information within the area 1061. For example, the processor 210 may display text 1064 indicating start time information of the first schedule and end time information of the first schedule. The end time information of the first schedule may be identified based on a type of the first schedule. According to an embodiment, the processor 210 may display text 1065 indicating start time information of the first schedule within the area 1061. For example, the text 1065 may correspond to the first part (or the first image 1011).

According to an embodiment, the processor 210 may display text 1066 indicating the second title information within the area 1062. For example, the text 1066 may correspond to the third part 1013. According to an embodiment, the processor 210 may display text 1067 indicating second time information within the area 1062. For example, the processor 210 may display text 1067 indicating start time information of the second schedule and end time information of the second schedule. The end time information of the second schedule may be identified based on a type of the second schedule. According to an embodiment, the processor 210 may display text 1068 indicating start time information of the second schedule within the area 1062. For example, the text 1068 may correspond to the second part (or the second image 1012).

In the state 1010, the processor 210 may receive a third user input for the first image 1011. The processor 210 may change a state of the electronic device 200 from the state 1010 to the state 1020 based on the third user input for the first image 1011.

In the state 1020, the processor 210 may restore the first image 1011 to the first part 1021, in response to a third user input to the first image 1011. For example, the processor 210 may restore the first image 1011 to the first part 1021, in response to a third user input to the first image 1011 among the first image 1011 and the second image 1012. The processor 210 may identify the first part 1021 and the third part 1013 as first title information based on the first image 1011 being restored to the first part 1021. For example, the processor 210 may maintain (or identify) the fourth part 1014 as second title information in response to a third user input to the first image 1011 of the first image 1011 and the second image 1012. For example, the processor 210 may change the first time information of the first schedule to a pre-determined time in response to a third user input to the first image 1011 of the first image 1011 and the second image 1012. For example, in response to the third user input to the first image 1011 of the first image 1011 and the second image 1012, the second time information of the second schedule may be maintained (or identified) as a second part.

According to an embodiment, the processor 210 may receive a second user input indicating registration of a schedule (e.g., the first schedule and the second schedule) corresponding to text based on the first user input. For example, the processor 210 may receive a second user input to the object 1018 to register a schedule (e.g., the first schedule and the second schedule) corresponding to the text. The processor 210 may change a state of the electronic device 200 from the state 1020 to the state 1030, based on the second user input.

In the state 1030, the processor 210 may display first title information and second title information in the first area 1016 among a plurality of areas indicating a plurality of dates within the calendar 1019. For example, the processor 210 may display an object 1031 indicating first title information in the first area 1016. The processor 210 may display an object 1032 indicating the second title information in the first area. The object 1031 may indicate a first part 1021 and a third part 1013. The object 1032 may indicate a fourth part 1014.

According to an embodiment, the processor 210 may change a state of the electronic device 200 from the state 1030 to the state 1040, in response to at least one touch input for the first area 1016.

In the state 1040, the processor 210 may display an area 1041 for indicating a first schedule and an area 1042 for indicating a second schedule.

According to an embodiment, the processor 210 may display text 1043 indicating first title information in the area 1041. For example, the text 1043 may correspond to the first part 1021 and the third part 1013. According to an embodiment, the processor 210 may display text 1044 indicating first time information within the area 1041. For example, text 1044 may correspond to a pre-determined time (e.g., "all day"). According to an embodiment, the processor 210 may display an object 1045 indicating a pre-defined time within the area 1041.

According to an embodiment, the processor 210 may display text 1046 indicating the second title information within the area 1042. For example, the text 1046 may correspond to the third part 1013. According to an embodiment, the processor 210 may display text 1047 indicating second time information within the area 1042. For example, the processor 210 may display text 1047 indicating start time information of the second schedule and end time information of the second schedule. The end time information of the second schedule may be identified based on a type of the second schedule. According to an embodiment, the processor 210 may display text 1048 indicating start time information of the second schedule within the area 1042. For example, the text 1048 may correspond to the second part (or the second image 1012).

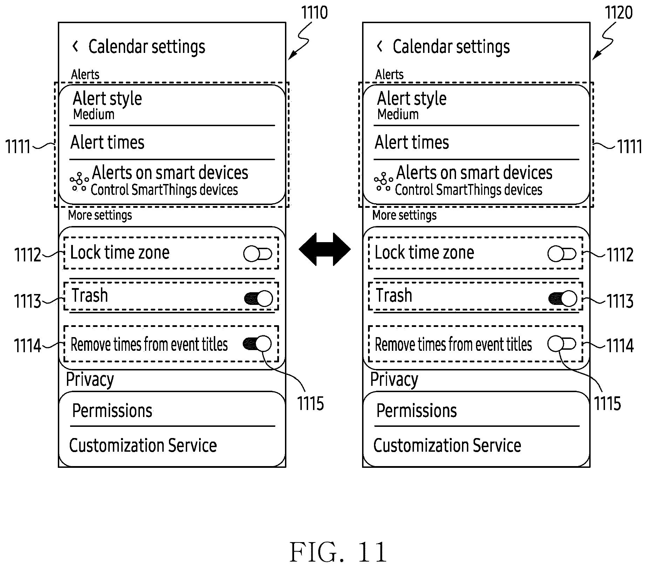

FIG. 11 illustrates an example of an operation of an electronic device according to an embodiment.

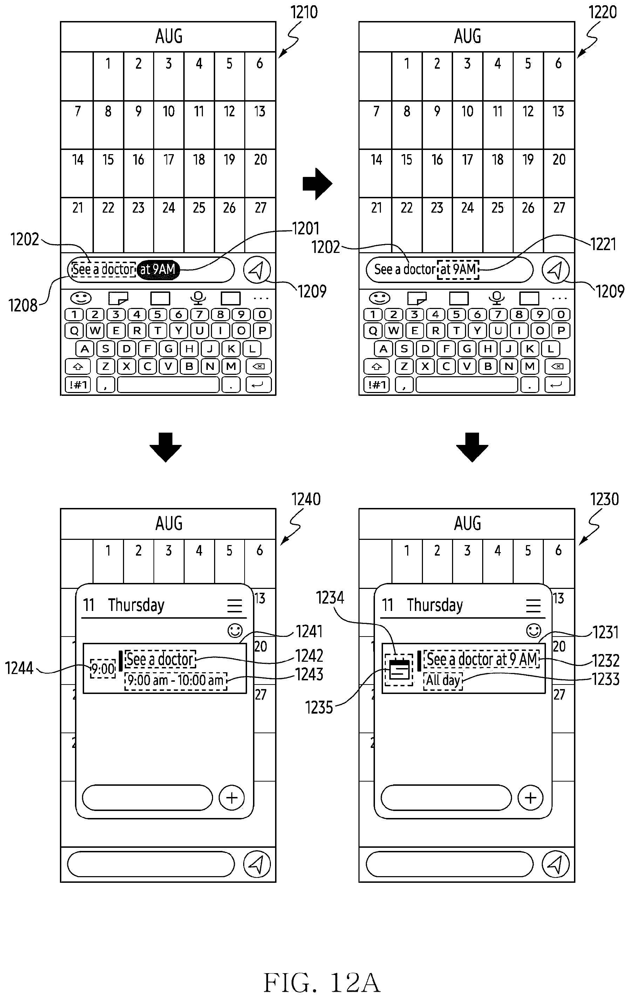

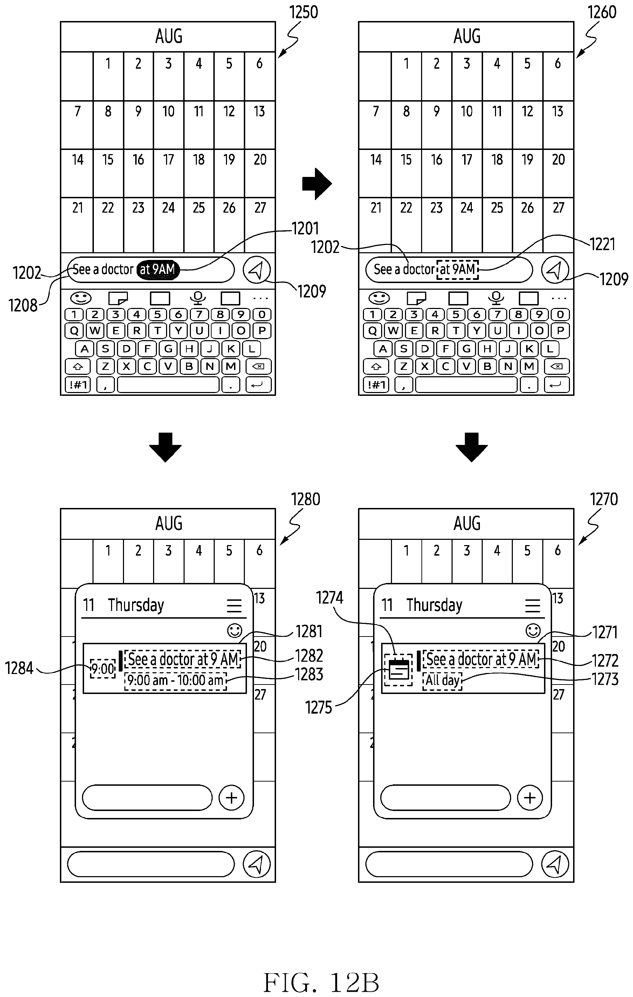

FIGS. 12A and 12B illustrate an example of an operation of an electronic device according to an embodiment.

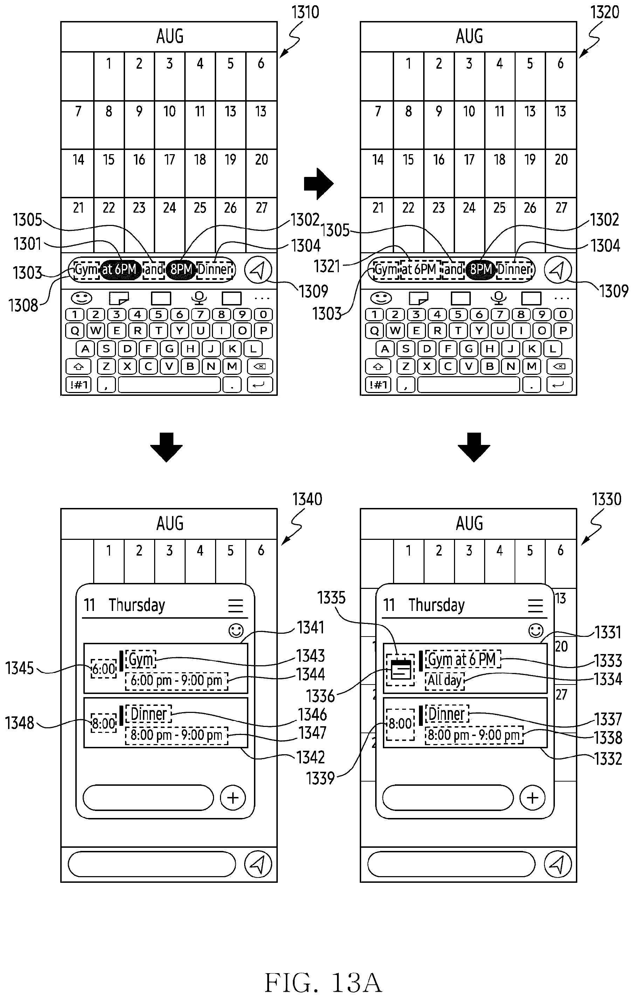

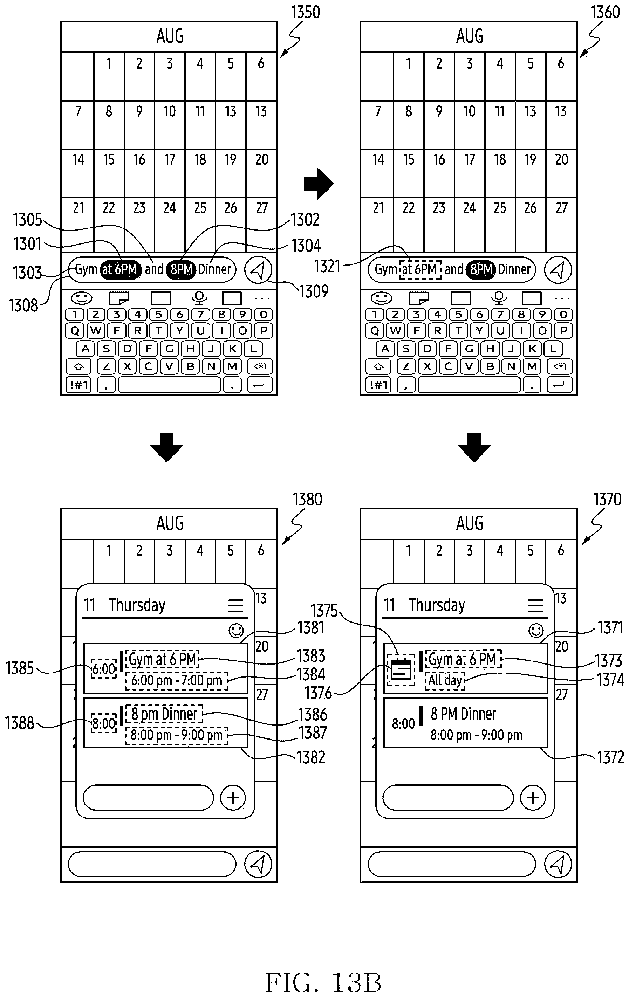

FIGS. 13A and 13B illustrate an example of an operation of an electronic device according to an embodiment.

Referring to FIG. 11, in the state 1110 and the state 1120, the processor 210 may display a screen for setting a software application for schedule management. According to an embodiment, the screen for setting the software application may include an area 1111 for setting a notification, an area 1112 for fixing (or setting) a time zone, an area 1113 for setting a trash function, and an area 1114 for setting a time removal within the title information.

According to an embodiment, the area 1114 may include a button 1115 for setting whether to remove time from the title information. For example, the processor 210 may change a state of the button 1115 based on an input to the button 1115 (e.g., a tap input or a slide input).

In the state 1110, the state of the button 1115 may be set to the first state. The processor 210 may set setting information (e.g., setting information related to time information) for the software application to a first value (e.g., true or 1). For example, when setting information for a software application is set to the first value, a function for removing time from the title information may be activated.

In the state 1120, a state of the button 1115 may be set to the second state. The processor 210 may set setting information (e.g., setting information related to time information) for the software application to a second value (e.g., false, or 0). For example, when setting information for a software application is set to the second value, a function for removing time from the title information may be deactivated.

According to an embodiment, when setting information for a software application is set to the first value, the processor 210 of the electronic device 200 may operate as shown in FIG. 12A or 13A. For example, the processor 210 may identify the first part of the text indicating time information together with the second part of the text as the first title information, based on the setting information for the software application being the first value.

According to an embodiment, when setting information for a software application is set to the second value, the processor 210 of the electronic device 200 may operate as shown in FIG. 12B or 13B. the processor 210 may identify the second part of the text excluding the first part of the text, indicating time information, as the first title information, based on the setting information for the software application being the second value.

Referring to FIG. 12A, the processor 210 may set setting information for a software application to a first value (e.g., true or 1). Once the setting information for the software application is set to a first value (e.g., true or 1), the processor 210 may operate in a state in which setting information for the software application is set to a first value. For example, when setting information for a software application is set to a first value, a function for removing time from the title information may be activated.

In state 1210, the processor 210 may display a first image 1201 in which the first part (e.g., the first part 1221 shown in the state 1220) (hereinafter, the first part 1221) of the text input based on the first user input is changed and the second part 1202 of the text is unchanged, within the text input area 1208.

According to an embodiment, the processor 210 may receive a second user input indicating registration of a first schedule corresponding to text based on the first user input. For example, the processor 210 may receive a second user input for an object 1209. The processor 210 may register a first schedule corresponding to text based on the first user input, based on the second user input. The state 1240 may indicate a state in which the first schedule is registered.

In the state 1240, the processor 210 may indicate a first schedule in an area 1241. For example, the area 1241 may include an area 1242 for indicating first title information of the first schedule, an area 1243 for indicating first time information of the first schedule, and an area 1244 for indicating start time information of the first schedule.

According to an embodiment, the processor 210 may identify the second part 1202 of the text as first title information. The processor 210 may display the second part 1202 in the area 1242.

According to an embodiment, the processor 210 may identify the first part 1221 as first time information. For example, the processor 210 may identify the first part 1221 as start time information of the first schedule, among (e.g., the pieces of) the first time information. The processor 210 may identify a type of the first schedule, and may identify end time information of the first schedule, among the first time information, based on the identified type of the first schedule. The processor 210 may display first time information including start time information of the first schedule and end time information of the first schedule in the area 1243. According to an embodiment, the processor 210 may display start time information of the first schedule in the area 1244.

According to an embodiment, in the state 1210, the processor 210 may receive a third user input for the first image 1201. The processor 210 may change a state of the electronic device 200 from the state 1210 to the state 1220, based on the third user input.

In state 1220, the processor 210 may restore the first image 1201 to the first part 1221 of the text based on the first user input in response to the third user input.

According to an embodiment, after the first image 1201 is restored to the first part 1221, the processor 210 may receive a second user input indicating registration of a first schedule corresponding to the text based on the first user input. For example, after the first image 1201 is restored to the first part 1221, the processor 210 may receive a second user input to the object 1209. The processor 210 may register a first schedule corresponding to text based on the first user input, based on the second user input. The state 1230 may indicate a state in which the first schedule is registered.

In the state 1230, the processor 210 may indicate a first schedule in the area 1231. For example, the area 1231 may include an area 1232 for indicating first title information of the first schedule, an area 1233 for indicating first time information of the first schedule, and an area 1234 for indicating start time information of the first schedule.

According to an embodiment, the processor 210 may identify the first part 1221 and the second part 1202 of the text as first title information. The processor 210 may display the first part 1221 and the second part 1202 in the area 1232. According to an embodiment, the processor 210 may set the first time information of the first schedule to a pre-defined time (e.g., "all day"). The processor 210 may display the first time information set to the pre-defined time in the area 1233. According to an embodiment, the processor 210 may display an object 1235 indicating a pre-defined time in the area 1234.

Referring to FIG. 12B, the processor 210 may set setting information for a software application to a second value (e.g., false or 0). When the setting information for the software application is set to a second value (e.g., false or 0), the processor 210 may operate in a state in which setting information for the software application is set to a second value. For example, when setting information for a software application is set to a second value, a function for removing time from the title information may be deactivated.

In the state 1250, the processor 210 may display the first image 1201 in which the first part (e.g., the first part 1221 shown in the state 1220) (hereinafter, the first part 1221) of the text input based on the first user input is changed and the second part 1202 of the text is unchanged, within the text input area 1208. The state 1250 may correspond to the state 1210 of FIG. 12A.

According to an embodiment, the processor 210 may receive a second user input indicating registration of a first schedule corresponding to text based on the first user input. The processor 210 may register a first schedule corresponding to text based on the first user input based on the second user input. The state 1280 may indicate a state in which the first schedule is registered.

In the state 1280, the processor 210 may indicate a first schedule in the area 1281. For example, the area 1281 may include an area 1282 for indicating first title information of the first schedule, an area 1283 for indicating first time information of the first schedule, and an area 1284 for indicating start time information of the first schedule.

According to an embodiment, the processor 210 may identify the first part 1221 and the second part 1202 of the text as first title information. The processor 210 may display the first part 1221 and the second part 1202 in the area 1282. According to an embodiment, the processor 210 may identify the first part 1221 as first time information. For example, the processor 210 may identify the first part 1221 as start time information of the first schedule among the first time information. The processor 210 may identify a type of the first schedule, and may identify end time information of the first schedule among the first time information based on the identified type of the first schedule. The processor 210 may display first time information including start time information of the first schedule and end time information of the first schedule in the area 1283. According to an embodiment, the processor 210 may display start time information of the first schedule in the area 1284.

According to an embodiment, in the state 1250, the processor 210 may receive a third user input for the first image 1201. The processor 210 may change a state of the electronic device 200 from the state 1250 to the state 1260 based on the third user input.

In state 1260, the processor 210 may restore the first image 1201 to the first part 1221 of the text based on the first user input in response to the third user input. The state 1260 may correspond to the state 1220 of FIG. 12A.

According to an embodiment, after the first image 1201 is restored to the first part 1221, the processor 210 may receive a second user input indicating registration of the first schedule corresponding to the text based on the first user input. For example, after the first image 1201 is restored to the first part 1221, the processor 210 may receive a second user input for the object 1209. The processor 210 may register a first schedule corresponding to text based on the first user input, based on the second user input. The state 1270 may indicate a state in which the first schedule is registered.

In the state 1270, the processor 210 may indicate the first schedule in an area 1271. For example, the area 1271 may include an area 1272 for indicating first title information of the first schedule, an area 1273 for indicating first time information of the first schedule, and an area 1274 for indicating start time information of the first schedule.

According to an embodiment, the area 1271 may correspond to the area 1231 of FIG. 12A. For example, the area 1272 may correspond to the area 1232 of FIG. 12A. For example, the area 1273 may correspond to the area 1233 of FIG. 12A. For example, the area 1274 may correspond to the area 1234 of FIG. 12A. An object 1275 may correspond to the object 1235 of FIG. 12A.

Referring to FIG. 13A, the processor 210 may set setting information for a software application to a first value (e.g., true or 1). When the setting information for the software application is set to a first value (e.g., true or 1), the processor 210 may operate in a state in which setting information for the software application is set to a first value. For example, when setting information for a software application is set to a first value, a function for removing time from the title information may be activated.

In state 1310, the processor 210 may identify text for registration of the first schedule and the second schedule based on the first user input. The processor 210 may display a first image 1301 in which the first part (e.g., the first part 1321 shown in the state 1320) (hereinafter, the first part 1321) of the text is changed, a second image 1302 in which the second part (not shown) of the text is changed, a third part 1303, a fourth part 1304, and a fifth part 1305 of the text, within the text input area 1308. For example, the first image 1301 may be an image in which the first part 1321 is displayed in the form of a button. The second image 1302 may be an image in which a second part (not shown) is displayed in the form of a button. For example, the fifth part 1305 may be a part for dividing the first schedule from the second schedule. In FIG. 13A, the fifth part 1305 is indicated by "and", but is not limited thereto. For example, the fifth part 1305 may comprise one of a spacing, a comma, and other punctuations including a semicolon, period, etc.

According to an embodiment, the processor 210 may receive a second user input indicating registration of a first schedule and a second schedule corresponding to text based on the first user input. For example, the processor 210 may receive a second user input for the object 1309. The processor 210 may register a first schedule and a second schedule corresponding to text based on the first user input, based on the second user input. The state 1340 may indicate a state in which the first schedule and the second schedule are registered.

In the state 1340, the processor 210 may indicate a first schedule in an area 1341. The processor 210 may indicate a second schedule in an area 1342. For example, the area 1341 may include an area 1343 for indicating first title information of the first schedule, an area 1344 for indicating first time information of the first schedule, and an area 1345 for indicating start time information of the first schedule. For example, the area 1342 may include an area 1346 for indicating second title information of the second schedule, an area 1347 for indicating second time information of the second schedule, and an area 1348 for indicating start time information of the second schedule.

According to an embodiment, the processor 210 may identify the third part 1303 of the text as first title information. The processor 210 may display the third part 1303 in the area 1343. According to an embodiment, the processor 210 may identify the first part 1321 as first time information. For example, the processor 210 may identify the first part 1321 as start time information of the first schedule among the first time information. The processor 210 may identify a type of the first schedule, and may identify end time information of the first schedule among the first time information based on the identified type of the first schedule. The processor 210 may display first time information including start time information of the first schedule and end time information of the first schedule in the area 1344. According to an embodiment, the processor 210 may display start time information of the first schedule in the area 1345.

According to an embodiment, the processor 210 may identify the fourth part 1304 of the text as second title information. The processor 210 may display the third part 1303 in the area 1346. According to an embodiment, the processor 210 may identify the second part (not shown) as second time information. The processor 210 may identify the second time information based on the second image 1302. For example, the processor 210 may identify the second part (not shown) as start time information of the second schedule among the second time information. The processor 210 may identify the type of the second schedule, and may identify end time information of the second schedule among the second time information based on the identified type of the second schedule. The processor 210 may identify a type of the second schedule, and may identify end time information of the second schedule among the second time information based on the identified type of the second schedule. The processor 210 may display second time information including start time information of the second schedule and end time information of the second schedule in the area 1347. According to an embodiment, the processor 210 may display start time information of the second schedule in the area 1348.

According to an embodiment, in the state 1310, the processor 210 may receive a third user input for the first image 1301. For example, the processor 210 may receive a third user input for the first image 1301 and the second image 1302. The processor 210 may change a state of the electronic device 200 from the state 1310 to the state 1320 based on the third user input.

In state 1320, the processor 210 may restore the first image 1301 to the first part 1321 of the text based on the first user input in response to the third user input.

According to an embodiment, after the first image 1301 is restored to the first part 1321, the processor 210 may receive a second user input indicating registration of a first schedule and a second schedule corresponding to text based on the first user input. For example, after the first image 1301 is restored to the first part 1321, the processor 210 may receive a second user input to the object 1309. The processor 210 may simultaneously register a first schedule and a second schedule corresponding to text based on the first user input, based on the second user input. The state 1330 may indicate a state in which the first schedule and the second schedule are registered.

In the state 1330, the processor 210 may indicate a first schedule in an area 1331. The processor 210 may indicate a second schedule in an area 1332. For example, the area 1331 may include an area 1333 for indicating first title information of the first schedule, an area 1334 for indicating first time information of the first schedule, and an area 1335 for indicating start time information of the first schedule. For example, the area 1332 may include an area 1337 for indicating second title information of the second schedule, an area 1338 for indicating second time information of the second schedule, and an area 1339 for indicating start time information of the second schedule.

According to an embodiment, the processor 210 may identify the first part 1321 and the third part 1303 of the text as first title information of the first schedule. The processor 210 may display the first part 1321 and the third part 1303 in the area 1333. According to an embodiment, the processor 210 may set the first time information of the first schedule to a pre-defined time (e.g., "all day"). The processor 210 may display the first time information set to a pre-defined time in the area 1334. According to an embodiment, the processor 210 may display an object 1336 indicating a pre-defined time in the area 1335.

According to an embodiment, the area 1332 may correspond to the area 1342 of the state 1340. For example, the area 1337 may correspond to the area 1346 of the state 1340. For example, the area 1338 may correspond to the area 1347 of the state 1340. For example, the area 1339 may correspond to the area 1348 of the state 1340.

Referring to FIG. 13B, the processor 210 may set setting information for a software application to a second value (e.g., false or 0). When the setting information for the software application is set to a second value (e.g., false or 0), the processor 210 may operate in a state in which setting information for the software application is set to a second value. For example, when setting information for a software application is set to a second value, a function for removing time from the title information may be deactivated.

In state 1350, the processor 210 may identify text for registration of the first schedule and the second schedule based on the first user input. The processor 210 may display the first image 1301 in which the first part (e.g., the first part 1321 shown in the state 1320) (hereinafter, the first part 1321) of the text is changed, the second image 1302 in which the second part (not shown) of the text is changed, the third part 1303 of the text, the fourth part 1304 of the text and a fifth part 1305 of the text, within the text input area 1308. The state 1350 may correspond to the state 1310 of FIG. 13A.

According to an embodiment, the processor 210 may receive a second user input indicating registration of a first schedule and a second schedule corresponding to text based on the first user input. The processor 210 may register a first schedule and a second schedule corresponding to text based on the first user input, based on the second user input. The state 1380 may indicate a state in which the first schedule and the second schedule are registered.

In the state 1380, the processor 210 may indicate a first schedule in an area 1381. The processor 210 may indicate a second schedule in an area 1382. For example, the area 1381 may include an area 1383 for indicating first title information of the first schedule, an area 1384 for indicating first time information of the first schedule, and an area 1385 for indicating start time information of the first schedule. For example, the area 1382 may include an area 1386 for indicating second title information of the second schedule, an area 1387 for indicating second time information of the second schedule, and an area 1388 for indicating start time information of the second schedule.

According to an embodiment, the processor 210 may identify the first part 1321 and the third part 1303 of the text as first title information. The processor 210 may display the first part 1321 and the third part 1303 in the area 1383. According to an embodiment, the processor 210 may identify the first part 1321 as first time information. For example, the processor 210 may identify the first part 1321 as start time information of the first schedule among the first time information. The processor 210 may identify a type of the first schedule, and may identify end time information of the first schedule among the first time information based on the identified type of the first schedule. The processor 210 may display first time information including start time information of the first schedule and end time information of the first schedule in the area 1384. According to an embodiment, the processor 210 may display start time information of the first schedule in the area 1385.

According to an embodiment, the processor 210 may identify the second part and the fourth part 1304 of the text as second title information. The processor 210 may display the second part and the fourth part 1304 in the area 1386. According to an embodiment, the processor 210 may identify the second part as second time information. For example, the processor 210 may identify the second part as start time information of the second schedule among the second time information. The processor 210 may identify a type of the second schedule, and may identify end time information of the second schedule among the second time information based on the identified type of the second schedule. The processor 210 may display second time information including start time information of the second schedule and end time information of the second schedule in the area 1387. According to an embodiment, the processor 210 may display start time information of the first schedule in the area 1388.

According to an embodiment, in the state 1350, the processor 210 may receive a third user input for the first image 1301. The processor 210 may change a state of the electronic device 200 from the state 1350 to the state 1360, based on the third user input.

In state 1360, the processor 210 may restore the first image 1301 to a first part 1321 of the text based on the first user input in response to the third user input. The state 1360 may correspond to the state 1320 of FIG. 13A.

According to an embodiment, after the first image 1301 is restored to the first part 1321, the processor 210 may receive a second user input indicating registration of a first schedule and a second schedule corresponding to text based on the first user input. The processor 210 may register a first schedule and a second schedule corresponding to text based on the first user input, based on the second user input. The state 1370 may indicate a state in which the first schedule and the second schedule are registered.

In the state 1370, the processor 210 may indicate a first schedule in an area 1371. The processor 210 may indicate a second schedule in an area 1372. For example, the area 1371 may correspond to the area 1331 of FIG. 13A. For example, the area 1371 may include an area 1373 for indicating first title information of the first schedule, an area 1374 for indicating first time information of the first schedule, and an area 1375 for indicating start time information of the first schedule.

According to an embodiment, the processor 210 may identify the first part 1321 and the third part 1303 of the text as first title information of the first schedule. The processor 210 may display the first part 1321 and the third part 1303 in the area 1373. According to an embodiment, the processor 210 may set the first time information of the first schedule to a pre-defined time (e.g., "all day"). The processor 210 may display the first time information set to the pre-defined time in the area 1374. According to an embodiment, the processor 210 may display an object 1376 indicating a pre-determined time in the area 1375.

According to an embodiment, the area 1372 may correspond to the area 1382. For example, the information displayed in the area 1372 may be set to be the same as the information shown in the area 1382.

According to an embodiment, an electronic device (e.g., the electronic device 200) may comprise a display (e.g., display 230); and a processor (e.g., processor 210) operatively coupled with the display, wherein the processor may be configured to display a calendar and a text input part within a user interface of software application for schedule management; identify that a first part and a second part of text included in the text input part represent time information based on a first user input; identify the first part as first time information of a first schedule and identify the second part as second time information of a second schedule, based at least in part on the first part and the second part of text included in the text input part representing time information; identify a third part of text, which is different from the first part, as first title information of the first schedule and identify a fourth part of text, which is different from the second part, as second title information, based at least in part on the first part and the second part of text included in the text input part representing time information; and display the first title information according to the first time information and the second title information according to the second time information in response to a second user input representing registration of a schedule corresponding to the text.

According to an embodiment, the processor may be configured to display the first part to a first image representing the first time information and the second part to a second image representing the second time information, based at least in part on the first part and the second part of text included in the text input part representing time information.

According to an embodiment, the processor may be configured to restore the first image to the first part in response to third user input related to the first image among the first image and the second image, and store the first part and the third part as the first title information, based on the first image being restored to the first part.

According to an embodiment, the processor may be configured to maintain the fourth part as the second title information, based on the first image being restored to the first part.

According to an embodiment, the processor may be configured to store the first time information of the first schedule to pre-determined time, in response to third user input related to the first image.

According to an embodiment, the processor may be configured to store the first part and the third part as first title information of the first schedule and store the fourth part as the second title information, based on setting information for the software application having a first value.

According to an embodiment, the processor may be configured to store the second part as first title information of the first schedule and store the fourth part as the second title information, based on setting information for the software application having a second value.

According to an embodiment, the processor may be configured to provide a virtual keyboard with the text input part, superimposed on the calendar, in response to at least one touch input on the text input part, and identify (or receive) the first user input through the virtual keyboard.

According to an embodiment, the processor may be configured to provide the first title information according to the first time information and the second title information according to the second time information on an area corresponding to a current date in the calendar, in response to the second user input.

According to an embodiment, the first part and the second part may be composed of prepositional phrases respectively, and wherein the processor may be configured to identify first time interval based on the first part; and identify second time interval based on the second part.

According to an embodiment, the processor may be configured to identify start time information of the first schedule and end time information of the first schedule among the first time information, based on the first time interval; and identify start time information of the second schedule and end time information of the second schedule among the second time information, based on the second time interval.

According to an embodiment, the electronic device may comprise a memory for storing information on time interval according to a schedule type, and wherein the processor may be configured to identify the first part as the start time of the first schedule among the first time information; identify a type of the first schedule, based on the third part; identify the end time information of the first schedule, based on the identified type of the first schedule; and provide the first title information, the start time information of the first schedule, and the end time information of the first schedule in the calendar.

According to an embodiment, the processor may be configured to identify (or receive) at least one touch input on a first area among a plurality of areas representing a plurality of dates in the calendar; identify (or receive) the first user input after the at least one touch input on the first area is received; and provide the first title information and the second time information on the first area.

According to an embodiment, the processor may be configured to identify (or receive) at least one touch input on a first area among a plurality of areas representing a plurality of dates in the calendar; display a pop-up window including another text input part with at least one schedule set at a date corresponding to the first area, superimposed on the calendar, in response to the at least one touch input; and provide the first title information and the second title information in the calendar, based on the first user input to the another text input part.

According to an embodiment, the processor may be configured to identify a fifth part for dividing the first schedule and the second schedule, in the text; and identify that the first part and the second part represent time information, based on the fifth part.

According to an embodiment, a method of an electronic device may comprise displaying a calendar and a text input part within a user interface of software application for schedule management; identifying that a first part and a second part of text included in the text input part represent time information, based on a first user input; identifying (or storing) the first part as first time information of a first schedule and identifying (or storing) the second part as second time information of a second schedule, based at least part on that the first part and the second part of text included in the text input part represent time information; identifying (or storing) a third part of text, which is different from the first part, as first title information of the first schedule and identifying (or storing) a fourth part of text, which is different from the second part, as second title information, based at least in part on the first part and the second part of text included in the text input part representing time information; and displaying (or providing) the first title information according to the first time information and the second title information according to the second time information, in response to a second user input representing registration of a schedule corresponding to the text.

According to an embodiment, the method may comprise based at least in part on that the first part and the second part of text included in the text input part represent time information, displaying the first part to a first image representing the first time information and displaying the second part to a second image representing the second time information.

According to an embodiment, the method may comprise restoring the first image to the first part in response to third user input related to the first image among the first image and the second image, and identifying (or storing) the first part and the third part as the first title information based on the first image being restored to the first part.

According to an embodiment, the method may comprise maintaining the fourth part as the second title information, based on the first image is restored to the first part.

According to an embodiment, the method may comprise displaying (or providing) a virtual keyboard with the text input part, superimposed on the calendar in response to identifying (or receiving) that at least one touch input on the text input part, and identifying (or receiving) the first user input through the virtual keyboard.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display; and
a processor operatively coupled with the display, wherein the processor is configured to:
display a calendar and a text input part within a user interface of a software application for schedule management,
based on a first user input, identify that a first part and a second part of text included in the text input part represent time information,
based at least in part on the first part and the second part of the text included in the text input part representing the time information, identify the first part as first time information of a first schedule and identify the second part as second time information of a second schedule,
based at least in part on the first part and the second part of the text included in the text input part representing the time information, identify a third part of the text, which is different from the first part, as first title information of the first schedule and identify a fourth part of the text, which is different from the second part, as second title information, and
in response to a second user input representing registration of a schedule corresponding to the text, display the first title information according to the first time information and the second title information according to the second time information.

2. The electronic device according to claim 1, wherein the processor is configured to:
based at least in part on the first part and the second part of the text included in the text input part representing the time information, change the first part to a first image representing the first time information and the second part to a second image representing the second time information.

3. The electronic device according to claim 2, wherein the processor is configured to:
restore, in response to a third user input related to the first image among the first image and the second image, the first image to the first part, and
based on the first image being restored to the first part, identify the first part and the third part as the first title information.

4. The electronic device according to claim 3, wherein the processor is configured to:
maintain, based on the first image being restored to the first part, the fourth part as the second title information.

5. The electronic device according to claim 3, wherein the processor is configured to:
in response to the third user input being related to the first image, change the first time information of the first schedule to a pre-determined time.

6. The electronic device according to claim 1, wherein the processor is configured to:
based on setting information for the software application having a first value, identify the first part and the third part as the first title information of the first schedule and identify the fourth part as the second title information.

7. The electronic device according to claim 6, wherein the processor is configured to:
based on setting information for the software application having a second value, identify the second part as the first title information of the first schedule and identify the fourth part as the second title information.

8. The electronic device according to claim 1, wherein the processor is configured to:
in response to at least one touch input on the text input part, display a virtual keyboard with the text input part, superimposed on the calendar, and
receive the first user input through the virtual keyboard.

9. The electronic device according to claim 1, wherein the processor is configured to:
in response to the second user input, display the first title information according to the first time information and the second title information according to the second time information on an area corresponding to a current date in the calendar.

10. The electronic device according to claim 1, wherein the first part and the second part comprise a prepositional phrase respectively, and
wherein the processor is configured to:
identify, based on the first part, a first time interval, and
identify, based on the second part, a second time interval.

11. The electronic device according to claim 10, wherein the processor is configured to:
identify, based on the first time interval, start time information of the first schedule and end time information of the first schedule from the first time information, and
identify, based on the second time interval, start time information of the second schedule and end time information of the second schedule from the second time information.

12. The electronic device according to claim 1, further comprising
a memory for storing information on time interval according to a schedule type,
wherein the processor is configured to:
identify the first part as a start time of the first schedule from the first time information,
identify, based on the third part, a type of the first schedule,
identify, based on the type of the first schedule, the end time information of the first schedule, and
display the first title information, the start time information of the first schedule, and the end time information of the first schedule in the calendar.

13. The electronic device according to claim 1, wherein the processor is configured to:
receive at least one touch input on a first area among a plurality of areas representing a plurality of dates in the calendar,
receive the first user input after the at least one touch input on the first area is received, and
display the first title information and the second time information on the first area.

14. The electronic device according to claim 1, wherein the processor is configured to:
receive at least one touch input on a first area among a plurality of areas representing a plurality of dates in the calendar,
in response to the at least one touch input, display a pop-up window including another text input part with at least one schedule set at a date corresponding to the first area, superimposed on the calendar, and
based on the first user input to the another text input part, display the first title information and the second title information in the calendar.

15. A method of an electronic device comprising:
displaying a calendar and a text input part within a user interface of a software application for schedule management,
based on a first user input, identifying that a first part and a second part of text included in the text input part represent time information,
based at least in part on the first part and the second part of text included in the text input part representing the time information, identifying the first part as first time information of a first schedule and identifying the second part as second time information of a second schedule,
based at least in part on the first part and the second part of the text included in the text input part representing the time information, identifying a third part of the text, which is different from the first part, as first title information of the first schedule and identifying a fourth part of the text, which is different from the second part, as second title information, and
in response to a second user input representing registration of a schedule corresponding to the text, displaying the first title information according to the first time information and the second title information according to the second time information.
